# EUROPÄISCHE PATENTSCHRIFT

(11) **EP 3 198 716 B1**
(45) Veröffentlichungstag und Bekanntmachung des Hinweises auf die Patenterteilung: **19.11.2025**
(21) Anmeldenummer: 15763290.2
(22) Anmeldetag: 09.09.2015
(51) Int. Cl.: H02M 7/493, H02M 1/12

(54) **VERFAHREN ZUM ERZEUGEN EINES ELEKTRISCHEN WECHSELSTROMS**
METHOD FOR GENERATING AN ALTERNATING ELECTRIC CURRENT
PROCÉDÉ PERMETTANT DE GÉNÉRER UN COURANT ÉLECTRIQUE ALTERNATIF

(30) Priorität: 22.09.2014 DE 102014219052
(43) Veröffentlichungstag der Anmeldung: 02.08.2017
(73) Patentinhaber: Wobben Properties GmbH, 26607 Aurich (DE)
(72) Erfinder: GENSIOR, Albrecht, 01277 Dresden (DE)
(74) Vertreter: Eisenführ Speiser
(86) Internationale Anmeldenummer: PCT/EP2015/070536
(87) Internationale Veröffentlichungsnummer: WO 2016/045963

(56) Entgegenhaltungen:
- JP-B2- 2 906 616
- US-A1- 2007 121 353
- US-A1- 2008 278 977
- MILOSEVIC M ET AL: "Interaction between hysteresis controlled inverters used in distributed generation systems", POWER ENGINEERING SOCIETY GENERAL MEETING, 2004. IEEE, IEEE, PISCATAWAY, NJ, USA, 6 June 2004 (2004-06-06), pages 2188 - 2193, XP010756335, ISBN: 978-0-7803-8465-1, DOI: 10.1109/PES.2004.1373270
- ATTAIANESE C ET AL: "Dual Boost High performances Power Factor Correction (PFC)", APPLIED POWER ELECTRONICS CONFERENCE AND EXPOSITION, 2008. APEC 2008. TWENTY-THIRD ANNUAL IEEE, IEEE, PISCATAWAY, NJ, USA, 24 February 2008 (2008-02-24), pages 1027 - 1032, XP031253374, ISBN: 978-1-4244-1873-2
- BOSE B K: "AN ADAPTIVE HYSTERESIS-BAND CURRENT CONTROL TECHNIQUE OF A VOLTAGE-FED PWM INVERTER FOR MACHINE DRIVE SYSTEM", IEEE TRANSACTIONS ON INDUSTRIAL ELECTRONICS, IEEE SERVICE CENTER, PISCATAWAY, NJ, USA, vol. 37, no. 5, 1 October 1990 (1990-10-01), pages 402 - 408, XP000162780, ISSN: 0278-0046, DOI: 10.1109/41.103436
- MEYER M ET AL: "A HYSTERESIS CURRENT CONTROL FOR PARALLEL CONNECTED LINE-SIDE CONVERTERS OF AN INVERTER LOCOMOTIVE", CONTROL IN POWER ELECTRONICS. BRIGHTON, SEPT. 13 - 16, 1993; [PROCEEDINGS OF THE EUROPEAN CONFERENCE ON POWER ELECTRONICS AND APPLICATIONS], LONDON, IEE, GB, vol. 4, 13 September 1993 (1993-09-13), pages 102 - 109, XP000427058
- SAE-SUE S ET AL: "Comparative performance evaluation of fixed and adaptive hysteresis band delta modulation techniques for UPS", POWER ELECTRONICS AND DRIVE SYSTEMS, 1999. PEDS '99. PROCEEDINGS OF TH E IEEE 1999 INTERNATIONAL CONFERENCE ON HONG KONG 27-29 JULY 1999, PISCATAWAY, NJ, USA,IEEE, US, vol. 2, 27 July 1999 (1999-07-27), pages 956 - 960, XP010351959, ISBN: 978-0-7803-5769-3

## Beschreibung

Die vorliegende Erfindung betrifft ein Verfahren zum Erzeugen eines elektrischen Wechselstroms zum Einspeisen in ein elektrisches Versorgungsnetz. Weiterhin betrifft die vorliegende Erfindung eine entsprechende Einspeisevorrichtung. Die Erfindung betrifft auch eine Windenergieanlage mit einer solchen Einspeisevorrichtung.

Es ist besonders für Windenergieanlagen bekannt, elektrischen Wechselstrom zum Einspeisen in ein elektrisches Versorgungsnetz dadurch zu erzeugen, dass mehrere Wechselrichter jeweils einen Teilstrom erzeugen und diese Teilströme zu einem Gesamtstrom überlagert werden und dieser überlagerte Gesamtstrom in das Netz eingespeist wird.

Solche Teilströme werden mittels eines Modulationsverfahrens erzeugt, das auch als Pulsbreiten-Modulation bezeichnet werden kann. Ein grundsätzliches Verfahren zum Erzeugen eines solchen Wechselstroms ist eine sogenannte Dreiecksmodulation. Hier wird, etwas vereinfacht ausgedrückt, einem gewünschten Sinusverlauf ein Sägezahnsignal überlagert und dann zu jedem Schnittpunkt des Sägezahnsignals mit dem gewünschten sinusförmigen Verlauf ein entsprechender Halbleiterschalter geschlossen bzw. geöffnet, um einen Spannungspuls auszulösen oder zu beenden. Ein solches Verfahren, das nicht Gegenstand der vorliegenden Erfindung ist, kann vereinfachend auch als Steuerung bezeichnet werden, weil weder das vorgegebene sinusförmige Signal noch der überlagerte Sägezahn auf dem erzeugten Resultat beruht.

Ein anderes Verfahren ist ein Toleranzbandverfahren. Hierbei wird um eine sinusförmige Funktion, die dem gewünschten Strom entspricht, ein Toleranzband gelegt, also eine untere Abweichungsgrenze und eine obere Abweichungsgrenze. Es wird nun der erzeugte Ausgangsstrom erfasst und mit diesem Toleranzband verglichen. Erreicht der Strom die untere Toleranzbandgrenze, wird ein Schaltimpuls ausgelöst und erreicht der erfasste Strom die obere Toleranzbandgrenze, wird dieser Impuls beendet. Im Ergebnis variiert der Strom in diesem Toleranzband um den vorgegebenen, idealisierten sinusförmigen Verlauf.

Eine Verbesserung der Qualität des erzeugten Stromes kann besonders durch eine Verkleinerung des Toleranzbandes erfolgen. Wird dieses Band also schmaler gemacht, variiert der Strom entsprechend weniger um den idealen Sinusverlauf und dies führt regelmäßig auch dazu, dass die Schaltfrequenz sich erhöht, weil der erzeugte Strom durch die engeren Grenzen diese auch schneller erreicht und somit schneller eine Schalthandlung auslöst.

Insoweit ist dieses Verfahren gut bekannt und kann auch für einzelne Teilströme verwendet werden, die sich dann zu einem Gesamtstrom überlagern. Dieser so erzeugte Gesamtstrom kann dann in das elektrische Versorgungsnetz eingespeist werden.

Durch diese Überlagerung, die im Ergebnis eine Summierung dieser Teilströme ist, addieren sich im Grunde die Ströme zu jedem Zeitpunkt. Es addieren sich also die Augenblickswerte der Ströme zu dem jeweiligen Zeitpunkt. Dadurch kann sich auch eine gewisse Glättung in dem überlagerten Gesamtstrom ergeben. Dies kann dadurch erfolgen, dass sich die jeweiligen positiven und negativen Abweichungen vom idealen Sinus der vielen einzelnen Teilströme ganz oder zum Teil herausheben. Insbesondere dann, wenn diese einzelnen positiven und negativen Abweichungen statistisch gleich verteilt sind. Es kann aber auch passieren, dass viele positive oder viele negative Abweichungen der einzelnen Teilströme zusammenkommen und sich dann eine entsprechend besonders hohe Gesamtabweichung ergibt.

Um das zu verhindern, können die einzelnen Toleranzbänder jeweils so schmal gemacht werden, dass auch eine theoretische Addition jeweils einer positiven Abweichung jedes der Teilströme einen gewünschten Maximalwert für den Gesamtstrom nicht überschreitet.

Das würde aber bedeuten, besonders schmale Toleranzbänder vorzugeben, die entsprechend zu besonders hohen Frequenzen führen. Will man also auf diese Art und Weise im Falle von 10 Wechselrichtern, die jeweils einen Teilstrom erzeugen, eine solche sichere Begrenzung vornehmen, müsste jedes Toleranzband auf ein Zehntel der Breite gesetzt werden, die der maximal zulässigen Abweichung des Gesamtstroms entspricht. Im Ergebnis könnte eine zehnfache Schaltfrequenz beim Modulieren der Ströme die Folge sein. Der Aufwand ist somit enorm, um auf diese Art und Weise sicher zu gehen, dass der erzeugte Gesamtstrom keinen zu großen Wert annimmt.

Das Deutsche Patent- und Markenamt hat in der Prioritätsanmeldung zu vorliegender
Anmeldung folgenden Stand der Technik recherchiert: DE 40 23 207 C1 sowie einen Auszug aus Power Electronics and Variable Speed Drives von M. López et al. "Control design for parallel-connected DC-AC inverters using sliding mode control".
Weiterer relevanter Stand der Technik für die vorliegende Erfindung ist außerdem
MILOSEVIC M ET AL: "Interaction between hysteresis controlled inverters used in distributed generation systems", POWER ENGINEERING SOCIETY GENERAL MEETING, 2004. IEEE, IEEE, PISCATAWAY, NJ, USA, 6. Juni 2004 (2004-06-06), Seiten 2188-2193,
BOSE B K: "AN ADAPTIVE HYSTERESIS-BAND CURRENT CONTROL TECHNIQUE OF A VOLTAGE-FED PWM INVERTER FOR MACHINE DRIVE SYSTEM", IEEE TRANSACTIONS ON INDUSTRIAL ELECTRONICS, IEEE SERVICE CENTER, PISCATAWAY, NJ, USA, Bd. 37, Nr. 5, 1. Oktober 1990 (1990-10-01), Seiten 402-408
SAE-SUE S ET AL: "Comparative performance evaluation of fixed and adaptive hysteresis band delta modulation techniques for UPS", POWER ELECTRONICS AND DRIVE SYSTEMS, 1999. PEDS '99. PROCEEDINGS OF TH E IEEE 1999 INTERNATIONAL CONFERENCE ON HONG KONG 27-29 JULY 1999, PISCATAWAY, NJ, USA,IEEE, US, Bd. 2, 27. Juli 1999 (1999-07-27), Seiten 956-96
und JP 2 906616 B2.
Diese Druckschriften behandeln ebenfalls die Thematik von Modulationsverfahren bei Umrichtern mit Toleranzbandverfahren.

Aufgabe der vorliegenden Erfindung ist es somit, zumindest eines der oben genannten Probleme zu adressieren. Insbesondere soll eine Lösung vorgeschlagen werden, die auf möglichst einfache und effiziente Art und Weise verhindert, dass ein Gesamtausgangsstrom zu starke Abweichungen vom vorgegebenen Sinusverlauf annimmt. Zumindest soll gegenüber bisher bekannten Lösungen eine alternative Lösung vorgeschlagen werden.

Erfindungsgemäß wird ein Verfahren zum Erzeugen eines elektrischen Wechselstroms gemäß Anspruch 1 vorgeschlagen. Dieses Verfahren umfasst die Schritte Erzeugen mehrerer Teilströme und Überlagern der Teilströme zu einem Gesamtstrom. Jeder Teilstrom wird unter Verwendung eines Modulationsverfahrens erzeugt, das ein Toleranzbandverfahren mit Toleranzgrenzen verwendet. Dazu wird nun vorgeschlagen, dass die Toleranzgrenzen veränderbar sind, wobei die Toleranzgrenzen der Modulationsverfahren der Teilströme jeweils so gewählt werden, dass der Gesamtstrom innerhalb einer vorgegebenen Toleranzgrenze liegt.

Es können also somit zunächst normal breite Toleranzbänder verwendet werden. Übersteigt nun beispielsweise der Gesamtstrom den gewünschten optimalen Sinusverlauf nach oben, kann dem entgegengewirkt werden, indem die Toleranzgrenze für einen, mehrere oder alle der Teilströme zum Beispiel abgesenkt wird. Die Absenkungen können auch unterschiedlich sein. Die untere Grenze kann hierbei auch mit abgesenkt werden, sodass also nicht unbedingt eine höhere Frequenz entsteht.

Vorzugsweise werden somit diese Toleranzgrenzen in Abhängigkeit des erzeugten Gesamtstroms verändert. Es kann somit eine indirekte Rückführung im Sinne einer Regelung erreicht werden, ohne dass aber die jeweiligen Einzelströme unmittelbar geregelt werden. Vielmehr fließt diese Rückführung des Gesamtstroms über die Veränderung der Toleranzgrenzen ein. Gemäß einer Ausführungsform wird vorgeschlagen, dass die Toleranzgrenzen jedes der Modulationsverfahren ein Toleranzband mit einer oberen und einer unterer Toleranzgrenze bilden und die obere und untere Toleranzgrenze voneinander unabhängig verändert werden, oder das Toleranzband verschoben wird bei Beibehaltung eines konstanten Abstands zwischen unterer und oberer Toleranzgrenze.

Das Toleranzband jedes Modulationsverfahrens, also jeweils zum Erzeugen eines der Teilströme, hat eine obere und eine untere Toleranzgrenze und dazu wird vorgeschlagen, dass die obere und untere Toleranzgrenze voneinander unabhängig verändert werden. Es kann beispielsweise die obere Toleranzgrenze bei Bedarf abgesenkt werden, ohne die untere zu verändern, oder umgekehrt. Alternativ wird vorgeschlagen, dass das Toleranzband insgesamt verschoben wird. Durch das Verschieben des Toleranzbandes wird besonders erreicht, dass auf die Amplitude jedes Teilstroms dadurch eingewirkt werden kann, ohne die Schaltfrequenz zu verändern.

Vorzugsweise werden die Toleranzgrenzen der einzelnen Modulationsverfahren der Teilströme jeweils so gewählt bzw. dadurch verändert, dass der Gesamtstrom innerhalb einer vorgegebenen Toleranzgrenze liegt. Demnach wird eine Toleranzgrenze bzw. ein Toleranzband für den Gesamtstrom vorgegeben. Die Einhaltung dieser Toleranzgrenze wird dann dadurch erreicht, dass die einzelnen Toleranzgrenzen der Teilströme angepasst werden. Es erfolgt also nicht das Auslösen unmittelbarer Schalthandlungen, wenn der Gesamtstrom seine Toleranzgrenze erreicht, wie das bei dem Toleranzbandverfahren für jeden einzelnen Strom der Fall ist, sondern die Steuerung erfolgt indirekt über das Verändern der Toleranzgrenzen der einzelnen Teilströme.

Die Veränderung dieser einzelnen Toleranzgrenzen braucht aber nicht darauf zu warten, dass der Gesamtstrom seine Toleranzgrenze bzw. eine der beiden Toleranzgrenzen des Toleranzbandes erreicht. Stattdessen bzw. vorzugsweise können bereits die Abstände des Gesamtstroms zu seiner Toleranzgrenze zu einer Veränderung, insbesondere Verschiebung der Toleranzgrenzen der Modulationsverfahren der einzelnen Teilströme führen. Es kann auch außerdem oder alternativ ein Abstand des Gesamtstroms zu dem optimalen zu erreichenden Verlauf, also insbesondere dem optimalen Sinusverlauf, ausgewertet werden und abhängig davon die Toleranzgrenzen der einzelnen Modulationsverfahren der Teilströme verändert werden. Steigt also beispielsweise der Gesamtstrom über seinen optimalen Wert, können die Obergrenzen der Modulationsverfahren für die Teilströme abgesenkt werden. Sollte der Gesamtstrom noch weiter über seinen optimalen Wert steigen, können die Toleranzgrenzen bzw. in diesem Beispiel die obere Toleranzgrenze jedes Modulationsverfahrens jedes Teilstroms weiter abgesenkt werden. Gleiches kann sinngemäß natürlich auch für ein Abfallen unter den optimalen Wert erfolgen.

Vorzugsweise werden zum Einstellen der Toleranzgrenzen die Teilströme und der Gesamtstrom gemessen. Jedes einzelne Modulationsverfahren hat somit als Eingang zur Messung des jeweiligen Teilstroms auch den Messwert des Gesamtstroms. Daran ist auch zu erkennen, dass der Gesamtstrom als Messgröße für mehrere, teilweise sehr viele Modulationsverfahren gleichzeitig einfließt. Durch das vorgeschlagene Verfahren wird auch vermieden, dass eine Überreaktion auftreten kann, die auftreten könnte, wenn beispielsweise bei einem zu großen Gesamtstrom plötzlich alle Modulationsverfahren reagieren und jeden gerade anliegenden Puls beenden würden. Vorzugsweise werden die Toleranzgrenzen der einzelnen Modulationsverfahren maximal bis jeweils zum optimalen Wert der zugrunde gelegten Kurve, also bis zum optimalen sinusförmigen Verlauf verschoben. Dieser optimale zugrunde gelegte Verlauf bildet also für die Toleranzbandobergrenze den minimalen Wert und für die Toleranzbanduntergrenze den maximalen Wert. Dadurch kann zwar auf einen zu stark abweichenden Gesamtstrom schnell reagiert werden, die einzelnen Teilströme bewegen sich gleichwohl um ihren optimalen Wert, also in der Nähe des einzustellenden Sinusverlaufs.

Gemäß einer Ausführungsform wird vorgeschlagen, dass die Teilströme und der Gesamtstrom in ein gemeinsames Koordinatensystem transformiert werden, in dem einzuhaltende Grenzen vorgegeben werden, sodass der Gesamtstrom innerhalb einer bzw. der vorgegebenen Toleranzgrenze liegt. Vorzugsweise kann eine solche Transformation eine Transformation in ein drehendes Koordinatensystem sein. Somit können Messwerte und optimale Werte und Grenzwerte insbesondere nach Betrag und Phase vorgegeben werden. Für den optimalen Wert würde sich dann nur die Phase nicht aber der Betrag ändern. Die Grenzwerte könnten in dem drehenden Koordinatensystem einfacher definiert werden. Allerdings müsste der Messwert jedes Mal umgerechnet werden.

Unter eine solche Transformation fällt insoweit auch, dass Teilströme mit unterschiedlichen Werten gewichtet werden. Diese Gewichtung stellt somit eine Transformation dar und das kann beispielsweise bedeuten, dass die Toleranzgrenzen für unterschiedliche Teilströme unterschiedlich in Abhängigkeit des Gesamtstroms verändert werden.

Eine solche Gewichtung der Teilströme ist besonders dann vorteilhaft, wenn sich zwischen den einzelnen Teilströmen, also zwischen den einzelnen Wechselrichtern Ausgleichsströme einstellen. Solche Ausgleichsströme können insbesondere auch zwischen den einzelnen Wechselrichtern entstehen, wenn diese außerdem eingangsseitig mit demselben Gleichstromeingang galvanisch verbunden sind. Soweit solche Ausgleichsströme bekannt sind, sind diese in dem jeweils betroffenen Teilstrom als Komponente mit enthalten, fließen dann aber nicht in den Gesamtstrom mit ein. Der entsprechend gemessene Teilstrom, der auch für das Modulationsverfahren zurückgeführt wird, entspricht somit nicht dem Teilstrom, der tatsächlich dann dem Gesamtstrom zukommt. Dies kann bei einer entsprechenden Beeinflussung der Toleranzgrenzen durch eine Gewichtung berücksichtigt werden. Es wird dann also nicht mehr der entsprechende Teilstrom berücksichtigt, sondern eine Transformation mittels dieser Gewichtung.

Erfindungsgemäß wird zudem eine Einspeisevorrichtung zum Einspeisen elektrischen Stroms in ein elektrisches Versorgungsnetz gemäß Anspruch 6 vorgeschlagen. Eine solche Einspeisevorrichtung weist mehrere Wechselrichter jeweils mit einem Teilstromausgang auf, wobei jeweils ein Teilstrom an dem Teilstromausgang erzeugt bzw. dort bereitgestellt wird.

Weiterhin ist ein Summenstromausgang vorgesehen, der die Teilströme zu einem Gesamtstrom aufsummiert, wobei die Teilstromausgänge an einem Summierknoten zu dem Summenstromausgang verbunden sind. Dazu wird nun ein Verfahren zum Erzeugen des Stroms gemäß einer der vorstehenden Ausführungsformen vorgeschlagen. Vorzugsweise sind die Wechselrichter parallel geschaltet und weisen an ihrem Teilstromausgang jeweils eine Netzdrossel auf. Vorzugsweise ist nur die Netzdrossel ohne zusätzliche Ausgangsfilter vorgesehen. Insbesondere wird kein sonst üblicher L-C-L Filter verwendet, sondern nur die eine Netzinduktivität bzw. Netzdrossel. Bei dem Verfahren kann nämlich auf einen solchen Filter verzichtet werden. Durch die gesamtstromabhängige Veränderung der Toleranzbänder kann ein solcher sonst üblicher L-C-L Filter entbehrlich sein. Auf eine besondere Glättung bzw. Filterung der Einzelströme, sodass diese sich im Mittel zu einem möglichst günstigen Gesamtstrom überlagern, der insbesondere möglichst nah am Optimalwert verläuft, kann somit verzichtet werden.

Vorzugsweise ist zwischen jedem Teilstromausgang und dem Summierknoten nur jeweils eine Induktivität bzw. Netzinduktivität vorhanden, die auch als L-Filter bezeichnet werden kann. Üblicherweise sind auch die Teilstromausgänge dreiphasig ausgebildet und als Induktivität wird dann vorzugsweise eine dreiphasige Netzdrossel vorgeschlagen, bei der die Phasen magnetisch gekoppelt sind, indem z.B. eine Drossel mit 5-Schenkel-Kern verwendet wird.

Vorzugsweise kann auch auf eine zusätzliche Netzdrossel an dem Summenstromausgang verzichtet werden, weil das vorgeschlagene Verfahren bereits zu Einzelströmen führt, die sich vorteilhaft zu dem Gesamtstrom ergänzen.

Weiterhin wird vorgeschlagen, dass zum Einstellen der Toleranzgrenzen an jedem Teilstromausgang ein Messmittel zum Messen des jeweiligen Teilstroms vorgesehen ist und außerdem an dem Summenstromausgang ein Messmittel zum Messen des Gesamtstroms vorgesehen ist. Hier ist ein Messmittel ausreichend, das aber seine gemessenen Werte zu diversen Wechselrichtern zurückführt.

Gemäß einer weiteren Ausführungsform wird vorgeschlagen, dass die Wechselrichter oder einige davon eingangsseitig und außerdem oder alternativ ausgangsseitig galvanisch entkoppelt sind. Eine eingangsseitige Entkopplung kann beispielsweise bedeuten, dass die eingangsseitigen Stromsammelschienen oder Gleichstromzuführungen galvanisch entkoppelt sind. Dazu kann beispielsweise die Erzeugung des Gleichstroms bereits am Generator, besonders wenn eine Windenergieanlage verwendet wird, galvanisch getrennt in mehreren Systemen durchgeführt und entsprechend getrennt zu den einzelnen Wechselrichtern geführt werden.

Ausgangsseitig kann eine galvanische Entkopplung auch an einem gemeinsamen Transformator erfolgen. Eine Möglichkeit besteht darin, dass der Transformator unterschiedliche Abgriffe hat. Es werden dann galvanisch getrennte Teilwicklungen des gemeinsamen Transformators gespeist. Statt eines galvanischen Summierknotens ergibt sich eine magnetische Summierung. Der Transformator kann dann den Summierknoten bilden. Eine solche Entkopplung kann besonders gut mit dem vorgeschlagenen Verfahren der gesamten stromabhängigen Toleranzbandanpassung zusammenhängen. Hierbei werden die Einzelströme besonders bevorzugt erzeugt und können entsprechend gut zu dem Gesamtstrom überlagert werden. Ausgleichsströme können dadurch vermieden werden.

Erfindungsgemäß wird zudem eine Windenergieanlage vorgeschlagen, die zum Erzeugen und Einspeisen elektrischen Stroms vorbereitet ist und dazu eine Einspeisevorrichtung gemäß einem der vorstehend erläuterten Ausführungsformen umfasst. Die Windenergieanlage weist also mehrere Wechselrichter auf, die zusammen den Gesamtstrom für die Windenergieanlage zum Einspeisen in das Versorgungsnetz erzeugen.

Nachfolgend wird die Erfindung beispielhaft anhand von Ausführungsformen unter Bezugnahme auf die begleitenden Figuren näher erläutert.
- Fig. 1: zeigt eine Windenergieanlage in einer perspektivischen Ansicht.
- Fig. 2: zeigt schematisch eine Verschaltung mehrerer Wechselrichter zum Erzeugen eines Gesamtstroms.
- Fig. 3: veranschaulicht ein Toleranzbandverfahren.
- Fig. 4: zeigt eine schematische Struktur zum Verdeutlichen eines Teils eines Regelungsverfahrens gemäß einer Ausführungsform.

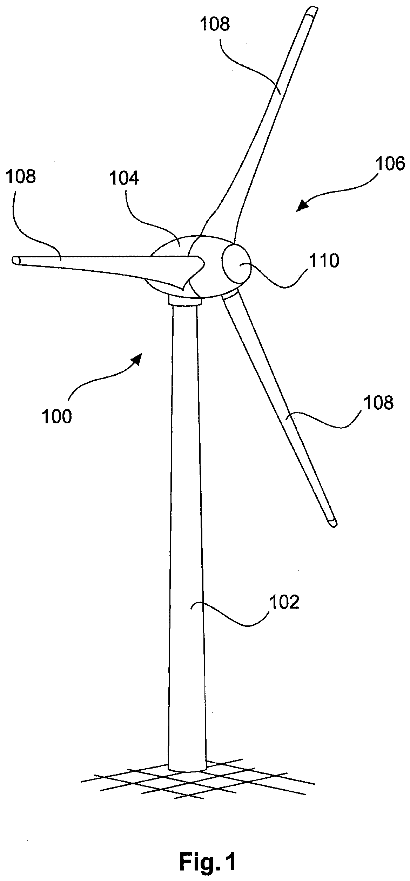

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

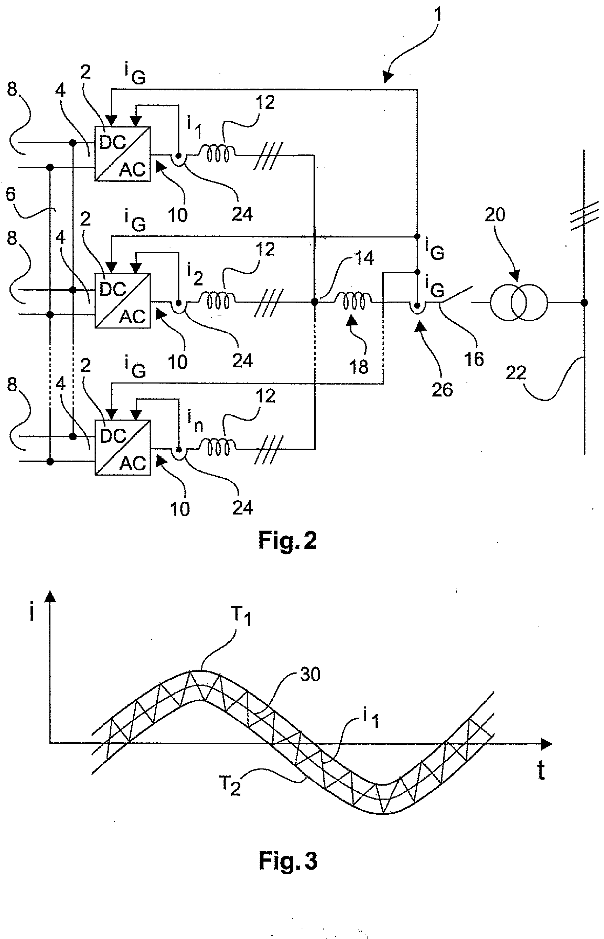

Die Schaltungsanordnung gemäß Fig. 2 veranschaulicht eine Einspeisevorrichtung 1 und zeigt dabei drei Wechselrichter 2, die exemplarisch für weitere Wechselrichter stehen. Insoweit erzeugen diese drei Wechselrichter 2 auch die Teilströme i₁, i₂ und iₙ. Die Wechselrichter 2 haben jeweils einen Gleichspannungseingang 4, der auch als DC-Eingang bezeichnet werden kann. Über diesen DC-Eingang 4 erhalten die Wechselrichter 2 ihre Eingangsleistung. Diese DC-Eingänge 4 der Wechselrichter 2 sind über einen DC-Bus 6 gekoppelt. Es ist aber auch gemäß einer Ausführungsform vorzuschlagen, dass diese DC-Eingänge 4 nicht gekoppelt sind, sondern jeweils an eine eigene DC-Quelle 8 angeschlossen sind. Die Fig. 2 zeigt beide diese Möglichkeiten. Eine Trennung der DC-Eingänge 4, sodass jeder DC-Eingang 4 eine eigene DC-Quelle 8 haben kann, kann beispielsweise so ausgeführt sein, dass bereits ein Generator, insbesondere einer Windenergieanlage, getrennte DC-Quellen 8 speist.

Die Wechselrichter 2 erzeugen nun an ihren Ausgängen, die jeweils als Teilstromausgang 10 bezeichnet werden, die jeweiligen Ausgangsströme i₁, i₂, bzw. iₙ. Der Ausgang jedes Wechselrichters weist zudem eine Ausgangsinduktivität 12 auf. Hinter jeder Ausgangsinduktivität ist angedeutet, dass jeder Wechselrichter 2 einen dreiphasigen Strom erzeugt. Der Fig. 2 ist somit auch zu entnehmen, dass diese Ausgangsinduktivität 12 an jedem Teilstromausgang 10 bei dem vorgeschlagenen Verfahren ausreichen kann. Ein sonst üblicher Filter, insbesondere L-C-L Filter ist nicht erforderlich. Die Ausgangsteilströme i₁, i₂ und iₙ werden an einem Summierknoten 14 überlagert, nämlich aufaddiert und an dem Summenstromausgang 16 als Gesamtstrom i_{G} geführt. Der Summenstromausgang weist eine gemeinsame Netzinduktivität 18 auf, die aber auch entbehrlich sein kann. Der Gesamtstrom i_{G} kann dann über einen Transformator 20 in das elektrische Versorgungsnetz 22 eingespeist werden.

Die weitere Funktionsweise wird nun über die Berücksichtigung der Ströme erläutert. Dabei ist zu beachten, dass sowohl die Teilströme am Ausgang jedes Wechselrichters 2, als auch der Gesamtausgangsstrom am Summenstromausgang 16 dreiphasig sind. Die weiteren Erläuterungen gehen aber jeweils nur auf eine Phase dieser dreiphasigen Ströme ein. Es wird also nur eine Phase betrachtet und die übrigen Phasen funktionieren in gleicher Art und Weise.

Es ist nun in Fig. 2 zu erkennen, dass es für jeden Teilstrom i₁, i₂ und iₙ einen Stromsensor 24 gibt. Ebenfalls ist ein Stromsensor 26 für den Gesamtstrom i_{G} vorgesehen.

Jeder Wechselrichter 2 verwendet nun einen Messwert seines Teilstroms, also i₁, i₂ oder iₙ, und außerdem den Messwert des Gesamtstroms i_{G}. Der Gesamtstrom i_{G} fließt also in jeden der Wechselrichter 2 ein. Jeder Wechselrichter stellt dann abhängig von dem Gesamtstrom i_{G} das entsprechende Toleranzband ein bzw. die entsprechenden Toleranzgrenzen des Toleranzbandes und steuert dann abhängig von seinem Teilstrom die entsprechenden Halbleiterschalter, um einen entsprechenden Strom zu modulieren.

Es werden dann also die Ströme i₁, i₂ und iₙ erzeugt, die bereits aufgrund der Art ihrer Schaltung und aufgrund der Ausgangsinduktivität 12 einen günstigen, schwingungsarmen Zustand aufweisen und dann am Summierknoten 14 überlagert werden. Das Ergebnis ist der Gesamtstrom i_{G}, dessen Messwert wie beschrieben zu jedem der Wechselrichter 2 zurückgeführt wird.

Fig. 3 veranschaulicht für ein Toleranzbandverfahren eine optimale Sinuskurve 30, um die ein Toleranzband mit einer oberen Toleranzgrenze T₁ und einer unteren Toleranzgrenze T₂ gelegt ist. Zur Veranschaulichung ist dieses Toleranzband sehr breit gezeichnet und wäre in der Realität natürlich viel schmaler.

In diesem Toleranzband zwischen den Grenzen T₁ und T₂ liegt der erzeugte Strom i₁, der hier beispielhaft verwendet wird.

Der Strom wird dadurch erzeugt, dass ein Schalter zum Erzeugen eines positiven Impulses geschlossen wird. Solange dieser positive Puls anliegt, steigt der Strom an und sobald er die Obergrenze T₁ erreicht hat, wird der entsprechende Schalter wieder geöffnet und der Puls beendet. Der Strom fällt dann ab, bis es die Untergrenze T₂ erreicht hat, sodass der genannte Schalter dann wieder geschlossen wird, um den Vorgang vereinfacht anschaulich zu erläutern.

Fig. 3 zeigt nun ein Toleranzband, bei dem der optimale Sinus 30 in der Mitte liegt, also gleich große Abstände zur oberen und unteren Grenze T₁ bzw. T₂ aufweist. Um nun beispielsweise einen hohen Gesamtstrom zu berücksichtigen bzw. dem entgegenzuwirken, kann die Obergrenze T₁ nach unten verschoben werden, sodass sie näher an den optimalen Sinus 30 heran kommt. Die Untergrenze T₂ kann ebenfalls weiter nach unten geschoben werden, oder sie bleibt unverändert.

Nach einer solchen Verschiebung des Toleranzbandes, also der beispielhaft beschriebenen Verschiebung der Obergrenze T₁, läuft das grundsätzliche Toleranzbandverfahren für den in Fig. 3 beispielhaft gezeigten Teilstrom i₁ aber ansonsten unverändert weiter. Das Verfahren prüft also weiterhin, ob der Strom mit einer steigenden Flanke die obere Toleranzgrenze T₁ erreicht hat, die nun allerdings woanders liegt, oder ob er mit abfallender Flanke die untere Toleranzgrenze T₂ erreicht hat.

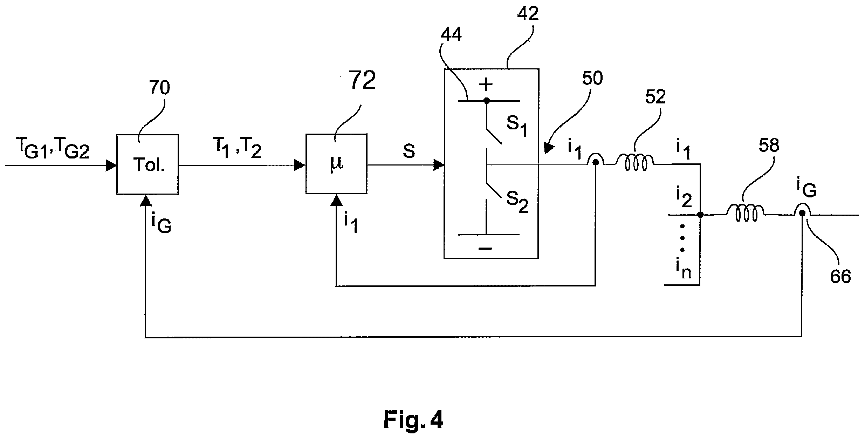

Das Verfahren ist in Fig. 4 in einer schematischen Struktur dargestellt, die eine Einspeisevorrichtung 41 veranschaulicht bzw. vereinfachend darstellt. Das tatsächliche Erzeugen des Teilstroms i₁ erfolgt in dem Wechselrichter 42, der hier schematisch einen Gleichspannungszwischenkreis 44 andeutet. Zwischen dem positiven und negativen Knoten sind die beiden Schalter S₁ und S₂ angeordnet, die ein Spannungspulsmuster erzeugen, sodass der Teilstrom i₁ an dem Teilstromausgang 50 auch bedingt durch die Ausgangsinduktivität 52 entsteht. Dieser Teilstrom i₁ summiert sich mit diversen weiteren Teilströmen i₂ bis iₙ zu dem Gesamtstrom i_{G}. Eine Netzinduktivität 58 kann für den Gesamtstrom i_{G} vorgesehen sein, sie kann aber auch entbehrlich sein.

Dieser Gesamtstrom i_{G} wird mit einem Gesamtstrommesser 66 gemessen und einem Toleranzblock 70 eingegeben. Der Toleranzblock 70 kann dann abhängig von dem Gesamtstrom und abhängig von Toleranzgrenzen T_{G1} und T_{G2} für den Gesamtstrom die konkrete Toleranzobergrenze T₁ und Toleranzuntergrenze T₂, die in Fig. 3 veranschaulicht wurden, vorgeben bzw. verändern. Diese obere und untere Toleranzgrenze T₁ und T₂ werden dann in die Steuereinheit 72 eingegeben. Die Steuereinheit 72 erhält außerdem den aktuellen Teilstrom i₁ und arbeitet dann wie in Fig. 3 erläutert. Abhängig von der Lage des Teilstroms i₁ in dem Toleranzband, das durch die obere und untere Toleranzgrenze T₁ und T₂ gegeben ist, werden dann Schaltsignale S generiert, die an den Wechselrichter 42 gegeben werden. Der Wechselrichter 42 schaltet dann entsprechend die Schalter S₁ und S₂. Insbesondere wird für einen positiven Puls der Schalter S₁ geschlossen und der Schalter S₂ ist geöffnet und für das Ende eines positiven Pulses, bzw. für einen negativen Puls, wird der Schalter S₂ geschlossen und der Schalter S₁ geöffnet.

Es stellt sich dann ein Teilstrom i₁ ein, der wieder für die nächste Berechnung zurückgeführt wird. Es stellt sich auch ein neuer Wert für den Gesamtstrom i_{G} ein, nämlich zusammen mit den weiteren Strömen i₂ bis iₙ und dieser Wert des Gesamtstroms i_{G} wird ebenfalls wie beschrieben zurückgeführt.

In Ergänzung zu dieser grundsätzlichen schematischen Beschreibung besonders im Zusammenhang mit den Figuren 3 und 4 kann auch vorgesehen sein, den Toleranzbereich, insbesondere einen festgelegten Toleranzbereich für den Gesamtstrom i_{G}, also die in Fig. 4 veranschaulichten Toleranzgrenzen T_{G1} und T_{G2} in geeignete Koordinaten zu transformieren, um die Einhaltung durch den Gesamtstrom besser überprüfen zu können und/oder daraus besser Reaktionen, insbesondere die Veränderung der oberen und unteren Toleranzgrenze T₁ und T₂ ableiten zu können. Entsprechend wird ein Verfahren vorgeschlagen, das die Einhaltung dieses Toleranzbereichs für den Gesamtstrom erreichen kann.

Es wird somit der Fall betrachtet, wenn mehrere leistungselektronische Systeme zusammen, also in Reihen- und/oder Parallelschaltung, betrieben und unabhängig voneinander mit Hilfe von approximierten Gleitregimereglern geregelt werden, die auch als Toleranzbandregler bezeichnet werden können bzw. solche umfassen können. Diese Gleitregimeregler können beispielsweise als Hystereseregler ausgeführt sein. Es kann dann meist sichergestellt werden, dass für jedes Teilsystem die Regelabweichung der Gleitfunktion innerhalb bestimmter Toleranzbänder bleibt.

Da es jedoch keine Synchronisierung der Schalthandlungen in den einzelnen Teilsystemen gibt, kann es passieren, dass die Regelabweichung von zusammengeschalteten Systemen gleichzeitig in der gleichen Richtung abweicht, so dass es zu einer ungünstigen Überlagerung kommt. Für dieses Problem wird eine Lösung wie oben beschrieben vorgeschlagen.

Um auch die Überlagerung von Strom- oder Spannungswelligkeiten gezielt zu beeinflussen, werden in der Praxis meist Verfahren verwendet, die eine Pulsweitenmodulation oder eine Raumzeigermodulation verwenden. Bei diesen Verfahren ist die Schaltfrequenz in der Regel fest und die Schaltzeitpunkte zusammengeschalteter Systeme werden gezielt versetzt, um eine gewünschte Überlagerung der Strom- bzw. Spannungswelligkeit zu erreichen.

Nachteilig an dieser Lösung ist, dass man auf die Vorteile verzichten muss, die Gleitregimeregelungen innewohnen, nämlich insbesondere die Eigenschaft, dass bestimmte Störungen stark unterdrückt werden.

Es wird nun auch vorgeschlagen, zusammengeschaltete leistungselektronische Systeme in einem approximierten Gleitregime so zu betreiben, dass die Einhaltung eines festgelegten Toleranzbereiches möglichst sichergestellt ist. Durch eine geeignete Wahl des Toleranzbereiches kann eine im Sinne der obigen Beschreibungen "ungünstige Überlagerung" von Oberschwingungen vermieden oder diese stark reduziert werden.

## Patentansprüche

1. Verfahren zum Erzeugen eines elektrischen Wechselstroms (i_{G}), umfassend die Schritte
- Erzeugen mehrerer Teilströme (i₁, i₂, iₙ)und
- Überlagern der Teilströme (i₁, i₂, iₙ) zu einem Gesamtstrom (i_{G}), wobei
jeder der Teilströme (i₁, i₂, iₙ) unter Verwendung eines Modulationsverfahrens erzeugt wird,
das Modulationsverfahren ein Toleranzbandverfahren mit Toleranzgrenzen (T₁, T₂) verwendet,
die Toleranzgrenzen (T₁, T₂) veränderbar sind, wobei
die Toleranzgrenzen (T₁, T₂) der Modulationsverfahren der Teilströme (i₁, i₂, iₙ) jeweils so gewählt werden, dass der Gesamtstrom (i_{G}) innerhalb einer vorgegebenen Toleranzgrenze (T_{G1}, T_{G2}) liegt,
**dadurch gekennzeichnet,**
**dass** die Toleranzgrenzen (T₁, T₂) jedes der Modulationsverfahren ein Toleranzband mit einer oberen und einer unteren Toleranzgrenze (T₁, T₂) bilden und die obere und untere Toleranzgrenze (T₁, T₂) voneinander unabhängig verändert werden, oder das Toleranzband verschoben wird bei Beibehaltung eines konstanten Abstands zwischen unterer und oberer Toleranzgrenze (T₁, T₂).

2. Verfahren nach Anspruch 1, **dadurch gekennzeichnet, dass** die Toleranzgrenzen in Abhängigkeit des erzeugten Gesamtstroms (i_{G}) verändert werden.

3. Verfahren nach einem der vorstehenden Ansprüche, **dadurch gekennzeichnet, dass** zum Einstellen der Toleranzgrenzen (T₁, T₂) die Teilströme (i₁, i₂, iₙ) und der Gesamtstrom (i_{G}) gemessen werden.

4. Verfahren nach einem der vorstehenden Ansprüche, **dadurch gekennzeichnet, dass** die Teilströme (i₁, i₂, iₙ) und der Gesamtstrom (i_{G}) in ein gemeinsames Koordinatensystem transformiert werden, in dem einzuhaltende Grenzen vorgegeben werden, so dass der Gesamtstrom (i_{G}) innerhalb einer bzw. der vorgegebenen Toleranzgrenze (T_{G1}, T_{G2}) liegt.

5. Verfahren nach Anspruch 4, **dadurch gekennzeichnet, dass** das gemeinsame Koordinatensystem ein drehendes Koordinatensystem ist.

6. Einspeisevorrichtung (1, 41) zum Einspeisen elektrischen Stroms in ein elektrisches Versorgungsnetz (22) umfassend
- mehrere Wechselrichter (2) jeweils mit einem Teilstromausgang (10) jeweils zum Erzeugen eines Teilstromes (i₁, i₂, iₙ) an dem Teilstromausgang (10),
- einen Summenstromausgang (16) zum Summieren der Teilströme (i₁, i₂, iₙ) zu einem Gesamtstrom(i_{G}), wobei die Teilstromausgänge (10) an einem Summierknoten (14) zu dem Summenstromausgang (16) verbunden sind,
wobei die Einspeisevorrichtung (1, 41) weiterhin eine Steuereinheit (72) aufweist,
wobei die Steuereinheit (72) dazu eingerichtet ist, ein Verfahren zum Erzeugen des Stroms gemäß einem der vorstehenden Ansprüche auszuführen.

7. Einspeisevorrichtung (1, 41) nach Anspruch 6, **dadurch gekennzeichnet, dass** die Wechselrichter (2) parallel geschaltet sind und an ihrem Teilstromausgang (10) jeweils eine Netzdrossel (12) aufweisen.

8. Einspeisevorrichtung (1,41) nach Anspruch 6 oder 7, **dadurch gekennzeichnet, dass** die Wechselrichter (2) an ihrem Stromausgang (10) jeweils mit einer Netzdrossel (12) ohne zusätzlichen Ausgangsfilter auskommen und/oder ohne zusätzliche Netzdrossel (18) an dem Summenstromausgang (16) auskommen.

9. Einspeisevorrichtung (1, 41) nach einem der Ansprüche 6 bis 8, **dadurch gekennzeichnet, dass** zum Einstellen der Toleranzgrenzen (T₁, T₂) an jedem Teilstromausgang (10) ein Messmittel zum Messen des jeweiligen Teilstroms (i₁, i₂, iₙ) und an dem Summenstromausgang (16) ein Messmittel zum Messen des Gesamtstroms (i_{G}) vorgesehen ist.

10. Einspeisevorrichtung (1, 41) nach einem der Ansprüche 6 bis 9, **dadurch gekennzeichnet, dass** die Wechselrichter (2) oder einige davon eingangsseitig und/oder ausgangsseitig galvanisch entkoppelt sind.

11. Windenergieanlage (100) zum Erzeugen und Einspeisen elektrischen Stroms in ein elektrisches Versorgungsnetz (22) mit einer Einspeisevorrichtung (1, 41) gemäß einem der Ansprüche 6 bis 10.

## Claims

1. Method for generating an alternating electric current (i_{G}), comprising the steps of
- generating multiple partial currents (i₁, i₂, iₙ) and
- superimposing the partial currents (i₁, i₂, iₙ) into a total current (i_{G}), wherein
each of the partial currents (i₁, i₂, iₙ) is generated using a modulation method,
the modulation method uses a tolerance band method having tolerance limits (T₁, T₂) and
the tolerance limits (T₁, T₂) are changeable wherein
the tolerance limits (T₁, T₂) of the modulation methods of the partial currents (i₁, i₂, iₙ) are selected in such a way that the total current (i_{G}) lies within a predefined tolerance limit (T_{G1}, T_{G2})
**characterized in that**
that the tolerance limits (T₁, T₂) of each of the modulation methods form a tolerance band having an upper and a lower tolerance limit (T₁, T₂), and the upper and lower tolerance limits (T₁, T₂) are changed independently of each other, or the tolerance band is shifted while retaining a constant distance between the lower and upper tolerance limits (T₁, T₂)
wherein the feed-in device further comprises a control unit (72), wherein the control unit (72) is arranged to execute a method for generating the current according to one of the preceding claims.

2. Method according to claim 1, **characterized in that** the tolerance limits are changed as a function of the generated total current (i_{G}).

3. Method according to one of the preceding claims, **characterized in that** for setting the tolerance limits (T₁, T₂), the partial currents (i₁, i₂, iₙ) and the total current (i_{G}) are measured.

4. Method according to one of the preceding claims, **characterized in that** the partial currents (i₁, i₂, iₙ) and the total current (i_{G}) are transformed into a shared coordinate system in which limits to be complied with are predefined, so that the total current (i_{G}) lies within a, or the, predefined tolerance limit (T_{G1}, T_{G2}).

5. Method according to claim 4, **characterized in that** the shared coordinate system is a rotating coordinate system.

6. Feed-in device (1, 41) for feeding in electric current into an electric power supply network (22), comprising
- multiple inverters (2), each having a partial current output (10), each for generating a partial current (i₁, i₂, iₙ) at the partial current output (10),
- a sum current output (16) for summing up the partial currents (i₁, i₂, iₙ) to a total current (i_{G}), wherein the partial current outputs (10) are connected to the sum current output (16) at a summing node (14),
wherein the feed-in device (1, 41) further comprising a control unit (72), wherein the control unit (72) is arranged to perform a method for generating a current according to one of the preceding claims.

7. Feed-in device (1, 41) according to claim 6, **characterized in that** the inverters (2) are connected in parallel and include a line reactor (12) at each of their partial current outputs (10).

8. Feed-in device (1, 41) according to claim 6 or 7, **characterized in that** the inverters (2) operate using a line reactor (12) at each of their current outputs (10) without an additional output filter and/or without an additional line reactor (18) at the sum current output (16).

9. Feed-in device (1, 41) according to one of claims 6 to 8, **characterized in that** for setting the tolerance limits (T₁, T₂), a measuring means is provided at each partial current output (10) for measuring the particular partial current (i₁, i₂, iₙ), and a measuring means is provided at the sum current output (16) for measuring the total current (i_{G}).

10. Feed-in device (1, 41) according to one of claims 6 to 9, **characterized in that** the inverters (2), or some of them, are galvanically decoupled on the input side and/or on the output side.

11. Wind turbine (100) for generating and feeding electric current into an electric power supply network (22) including a feed-in device (1, 41) according to one of Claims 6 to 10.

## Revendications

1. Procédé de génération d'un courant alternatif électrique (i_{G}), comprenant les étapes
- de génération de plusieurs courants partiels (i₁, i₂, iₙ) et
- de superposition des courants partiels (i₁, i₂, iₙ) en un courant total (i_{G}), dans lequel
chacun des courants partiels (i₁, i₂, iₙ) est généré en utilisant un procédé de modulation,
le procédé de modulation utilise un procédé de bande de tolérance avec des limites de tolérance (T₁, T₂),
les limites de tolérance (T₁, T₂) sont modifiables, dans lequel
les limites de tolérance (T₁, T₂) des procédés de modulation des courants partiels (i₁, i₂, iₙ) sont respectivement choisies de telle sorte que le courant total (i_{G}) se situe dans une limite de tolérance prédéfinie (T_{G1}, T_{G2}),
**caractérisé en ce**
**que** les limites de tolérance (T₁, T₂) de chacun des procédés de modulation forment une bande de tolérance avec une limite de tolérance supérieure et une limite de tolérance inférieure (T₁, T₂) et les limites de tolérance supérieure et inférieure (T₁, T₂) sont modifiées indépendamment l'une de l'autre, ou que la bande de tolérance est déplacée en maintenant une distance constante entre les limites de tolérance inférieure et supérieure (T₁, T₂).

2. Procédé selon la revendication 1, **caractérisé en ce que** les limites de tolérance sont modifiées en fonction du courant total généré (i_{G}).

3. Procédé selon l'une quelconque des revendications précédentes, **caractérisé en ce que** les courants partiels (i₁, i₂, iₙ) et le courant total (i_{G}) sont mesurés pour régler les limites de tolérance (T₁, T₂).

4. Procédé selon l'une quelconque des revendications précédentes, **caractérisé en ce que** les courants partiels (i₁, i₂, iₙ) et le courant total (i_{G}) sont transformés en un système de coordonnées commun dans lequel des limites à respecter sont prédéfinies de telle sorte que le courant total (i_{G}) se situe à l'intérieur d'une ou de la limite de tolérance (T_{G1}, T_{G2}) prédéfinie.

5. Procédé selon la revendication 4, **caractérisé en ce que** le système de coordonnées commun est un système de coordonnées tournant.

6. Dispositif d'injection (1, 41) pour injecter un courant électrique dans un réseau d'alimentation électrique (22) comprenant
- plusieurs onduleurs (2) respectivement avec une sortie de courant partiel (10) pour générer respectivement un courant partiel (i₁, i₂, iₙ) sur la sortie de courant partiel (10),
- une sortie de courant global (16) pour additionner les courants partiels (i₁, i₂, iₙ) en un courant total (i_{G}), dans lequel les sorties de courant partiel (10) sont reliées à la sortie de courant global (16) sur un nœud d'addition (14),
dans lequel le dispositif d'injection (1, 41) présente par ailleurs une unité de commande (72), dans lequel l'unité de commande (72) est mise au point pour exécuter un procédé de génération du courant selon l'une quelconque des revendications précédentes.

7. Dispositif d'injection (1, 41) selon la revendication 6, **caractérisé en ce que** les onduleurs (2) sont connectés en parallèle et présentent respectivement une bobine d'induction de réseau (12) sur leur sortie de courant partiel (10).

8. Dispositif d'injection (1, 41) selon la revendication 6 ou 7, **caractérisé en ce que** les onduleurs (2) disposent chacun d'une bobine de réseau (12) sans filtre de sortie supplémentaire sur leur sortie de courant (10) et/ou d'une bobine de réseau (18) supplémentaire au niveau de la sortie de courant total (16).

9. Dispositif d'injection (1, 41) selon l'une quelconque des revendications 6 à 8, **caractérisé en ce qu'**est prévu, pour régler les limites de tolérance (T₁, T₂) sur chaque sortie de courant partiel (10), un moyen de mesure pour mesurer le courant partiel (i₁, i₂, iₙ) respectif et un moyen de mesure destiné à mesurer le courant total (i_{G}) est prévu sur la sortie de courant total (16).

10. Dispositif d'injection (1, 41) selon l'une quelconque des revendications 6 à 9, **caractérisé en ce que** les onduleurs (2) ou certains d'entre eux sont découplés galvaniquement côté entrée et/ou côté sortie.

11. Éolienne (100) de génération et d'injection de courant électrique dans un réseau d'alimentation électrique (22) avec un dispositif d'injection (1, 41) selon l'une quelconque des revendications 6 à 10.
